# DEMANDE DE BREVET EUROPEEN

(11) **EP 2 273 154 A1**
(43) Date de publication de la demande: **12.01.2011**
(21) Numéro de dépôt: 10168624.4
(22) Date de dépôt: 06.07.2010
(51) Int. Cl.: F16H 3/12, F16H 61/04, B60W 10/06, B60W 10/10, B60W 10/02

(54) **Boite de vitesses à dérivation de couple et procédé de passages associé**

(30) Priorité: 07.07.2009 FR 0954700
(71) Demandeur: Peugeot Citroën Automobiles SA, 78140 Vélizy-Villacoublay (FR)
(72) Inventeur: Mitchell, Clément, 92250, LA GARENNE COLOMBES (FR)

(57) **Abrégé**

L'invention concerne une boîte de vitesses (1) de type manuelle pilotée d'un véhicule comportant un dispositif de synchronisation (24) des vitesses de rotation des arbres. Le dispositif de synchronisation permet de sélectionner le rapport de démultiplication utilisé pour la dérivation de couple pendant le changement de rapport en fonction du rapport de vitesse à engager. Ce dispositif est monté sur un arbre de marche arrière (25) et comprend un organe de friction, un premier pignon de frein (29) associé à un premier groupe de rapports de vitesses, un deuxième pignon de frein (30) associé à un deuxième groupe de rapports de vitesses, et un manchon de sélection (31) lié en rotation à l'organe de friction et mobile axialement le long de cet organe de friction.

## Description

L'invention concerne une boîte de vitesses de type manuelle pilotée d'un véhicule. L'invention a pour but d'améliorer le ressenti des changements de rapports de vitesses lors de la rupture de couple intervenant pendant le changement de rapport. L'invention a également pour but d'améliorer les prestations des boîtes de vitesses pilotées à passage de vitesse sous couple.

L'invention trouve une application particulièrement avantageuse dans le domaine des boîtes de vitesses mécaniques pilotées pour véhicule automobile. Les véhicules automobiles comportent une chaîne de traction formée par un organe de propulsion (formé par un moteur thermique et/ou machine électrique), un embrayage, et une boîte de vitesses qui adapte le couple moteur en fonction du couple demandé par les roues du véhicule. L'embrayage est relié, d'une part, au moteur et, d'autre part, à la boîte de vitesses, elle-même reliée aux roues du véhicule.

Une boîte de vitesses renferme, à l'intérieur d'un carter, un arbre primaire reliée à l'embrayage et un arbre secondaire indirectement relié aux roues du véhicule, ces deux arbres étant reliés entre eux par l'intermédiaire d'engrenages formant autant de rapports de démultiplication de vitesses que de rapports de vitesses.

Chaque engrenage comporte : un manchon à crabots, lié en rotation à un arbre, un pignon fixe lié en rotation à l'autre arbre et un pignon fou monté fou sur l'arbre sur lequel est monté le manchon à crabots. Le pignon fixe et le pignon fou sont engrenés l'un avec l'autre de façon permanente. La sollicitation d'un engrenage donné s'accompagne d'un déplacement du manchon à crabots en direction du pignon fou. Lorsque le manchon à crabots est relié au pignon fou, l'arbre primaire est accouplé à l'arbre secondaire via la liaison manchon à crabots, pignon fou et pignon fixe.

Suivant le diamètre du pignon fixe de l'engrenage sollicité, l'arbre secondaire (et donc les roues du véhicule) est entraîné en rotation avec une vitesse qui dépend du diamètre du pignon fixe sollicité par cet engrenage.

Le manchon à crabots permet d'accoupler le pignon fou d'un rapport de vitesse donné à l'arbre qui le porte. Le manchon à crabots est lié en rotation à son arbre mais est mobile axialement pour permettre l'accrochage avec le pignon fou. On parle de crabotage lorsque le manchon entre en coopération avec un pignon fou de sorte qu'un rapport de vitesse est engagé, et de décrabotage lorsque le manchon se dégage du pignon fou de sorte que le rapport est désengagé.

Pour que l'accouplement du manchon à crabots avec le pignon fou puisse se faire de façon confortable, il faut d'abord obtenir une synchronisation de la vitesse de rotation du pignon fou avec la vitesse de rotation de l'arbre sur lequel est monté le pignon fou. L'avantage d'une telle synchronisation est que l'on évite les bruits intervenants lors du crabotage. La synchronisation freine les inerties en rotation relative pour éviter le choc de crabotage.

Pour cela, la boîte de vitesses comporte également un dispositif de synchronisation. Ce dispositif de synchronisation permet d'égaliser la vitesse de rotation du pignon fou (rapport cible à craboter) avec celle de l'arbre qui le porte pour obtenir un changement de rapport confortable (sans choc ni bruit). Ce dispositif de synchronisation permet également d'obtenir une dérivation de couple autorisant une transmission de couple à la roue du véhicule pendant le changement de rapport.

Il est connu, du document FR 08 51362, un premier type de boîte de vitesses comportant un arbre primaire, un premier arbre secondaire et un deuxième arbre secondaire. Divers engrenages formant chacun un rapport de vitesse sont placés sur l'arbre primaire, sur le premier arbre secondaire et sur le deuxième arbre secondaire. Un premier dispositif de synchronisation est placé sur le deuxième arbre secondaire. Ce premier dispositif de synchronisation comporte un pignon fou monté fou sur le deuxième arbre secondaire. Le pignon fou engrène en permanence avec un pignon fixe monté solidaire en rotation sur l'arbre primaire et qui est associé à un rapport de vitesse donné, dans l'exemple décrit le rapport de sixième. Le pignon fou (lié en rotation à des bagues de friction dénommées stators) coopère avec le deuxième arbre secondaire (lié en rotation à des bagues de friction dénommées rotors) de façon à freiner l'arbre primaire en freinant la rotation du pignon fou. Lorsque le premier dispositif de synchronisation n'est pas sollicité, le pignon fou est libre en rotation par rapport à l'arbre secondaire qui le porte.

Ce premier type de boîte de vitesses décrit dans ce dernier document présente l'avantage de permettre d'installer un dispositif de synchronisation dans un carter de boîte de vitesses sans être obligé de dégager un espace spécialement conçu pour sa présence à l'intérieur du carter de cette première boîte de vitesses. De ce fait, le coût de l'installation d'un tel dispositif de synchronisation en est réduit.

Le problème présenté par ce même premier type de boîte de vitesses est qu'il comporte des performances réduites. En effet, le premier dispositif de synchronisation est généralement positionné soit sur le rapport de troisième, soit sur le rapport de sixième. Lorsque le premier dispositif de synchronisation est positionné sur le rapport de troisième, les passages sous couple pour les rapports inférieur ou égal à la troisième, sont optimisés. Lorsque le premier dispositif de synchronisation est positionné sur le rapport de troisième, les passages sous couple pour les rapports supérieurs à la troisième vitesse sont impossibles. Lorsque le premier dispositif de synchronisation est disposé sur le sixième rapport, tous les changements de rapports sont possibles sous couple mais la capacité de remplissage de couple sur les premiers rapports est plus limitée.

Le document WO 91/10079 décrit un deuxième type de boîte de vitesses comprenant un deuxième dispositif de synchronisation. Ce deuxième dispositif de synchronisation comprend un premier organe de frottement et un deuxième organe de frottement. Le premier organe de frottement agit par freinage de la vitesse de rotation de l'arbre primaire et le deuxième organe de frottement agit par freinage de la vitesse de rotation de l'arbre secondaire. Le premier organe, ou le deuxième organe, est sélectionné en fonction de l'arbre à ralentir et un seul de ces deux organes peut fonctionner à la fois.

La deuxième boîte de vitesses décrite dans ce dernier document présente l'avantage de pouvoir permettre de sélectionner l'un ou l'autre des organes de frottement en fonction du rapport de vitesse à engager, ce qui améliore le rendement obtenu. L'inconvénient présenté par cette deuxième boîte de vitesses est que sa conception est compliquée à réaliser et qu'elle est encombrante.

La présente invention a notamment pour but de remédier à ces inconvénients.

La boîte de vitesses selon l'invention permet d'adapter le freinage de l'arbre primaire en fonction du rapport de vitesse à engager, en sélectionnant la démultiplication utilisée pour la transmission du couple pendant le changement de rapport. Selon l'invention, la boîte de vitesses est une boîte à engrenages à au moins deux arbres parallèles, qui comporte des manchons à crabots et un dispositif de synchronisation équipé d'un unique organe de friction.

Ce dispositif de synchronisation est capable d'égaliser les vitesses de rotation de l'arbre primaire et de l'arbre secondaire par frottement et est positionné sur un axe parallèle à l'arbre primaire et à l'arbre secondaire. Dans un exemple préféré, l'axe est formé par l'arbre de marche arrière.

Ce dispositif de synchronisation permet également de transmettre du couple pendant les changements de rapports via un rapport de démultiplication sélectionnable parmi deux rapports définis.

Pour cela, le dispositif de synchronisation selon l'invention comporte aussi un manchon de sélection ayant pour fonction de sélectionner le rapport de dérivation de couple via un premier pignon de frein ou un deuxième pignon de frein qui sont engrenés chacun à une roue solidaire en rotation de l'arbre primaire ou de l'arbre secondaire.

Le principal avantage apporté par les deux rapports sélectionnables, est de pouvoir adapter le potentiel de couple transmissible selon le changement de rapport considéré.

L'organe de friction peut être par exemple un synchroniseur de grande capacité énergétique, mais aussi un embrayage de type multidisque humide, ou même un embrayage sec.

La présente invention propose une architecture permettant de sélectionner la démultiplication utilisée pour transmettre le couple pendant le changement de rapport en fonction de la situation de vie, ceci avec un unique organe de friction. Pour les passages 1 >2 et 2>3, la démultiplication utilisée correspond au rapport de troisième (ce qui permet d'obtenir un niveau de couple au pignon fixe pendant le changement de rapport proche du niveau de couple au pignon fixe final [rapport cible]), alors que pour les passages 3>4, 4>5 et 5>6, la démultiplication utilisée correspond au rapport de sixième.

L'invention a donc pour objet une boîte de vitesses de type manuelle pilotée d'un véhicule automobile comportant un carter renfermant :
- un arbre primaire apte à être lié en rotation à un moteur du véhicule par l'intermédiaire d'un embrayage,
- un arbre secondaire apte à être relié à au moins une roue motrice du véhicule,
- une pluralité de paires de pignons engrenés déterminant chacune un rapport de démultiplication de marche avant et comportant chacune un premier pignon solidaire d'un des deux arbres et un deuxième pignon monté fou en rotation sur l'autre arbre,
- au moins un manchon à crabots alternativement en position accouplée en liant en rotation un des deuxièmes pignons et son arbre et en position découplée libre en rotation par rapport au deuxième pignon, et
- un dispositif de synchronisation des vitesses de rotation des arbres permettant le passage du manchon à crabots de sa position découplée vers sa position accouplée en ajustant les vitesses de rotation du deuxième pignon et du manchon à crabots à accoupler, le dispositif de synchronisation étant placé sur un axe monté dans le carter de la boîte de vitesses,
   **caractérisée en ce que**
- le dispositif de synchronisation comprend
   - un organe de friction formé par une première pièce liée en rotation à l'axe et une deuxième pièce formant un moyeu monté fou sur l'axe,
   - un premier pignon de frein associé à un premier groupe de rapports de vitesses par engrenage avec une première roue,
   - un deuxième pignon de frein associé à un deuxième groupe de rapports de vitesses par engrenage avec une deuxième roue, le premier pignon de frein et le deuxième pignon de frein étant montés fous sur le moyeu de la deuxième pièce de l'organe de friction, la première roue et la deuxième roue étant chacune montées solidaires en rotation à un des deux arbres, et
   - un manchon de sélection lié en rotation à la deuxième pièce de l'organe de friction et mobile axialement le long de cette deuxième pièce entre une première position accouplée au premier pignon de frein et une deuxième position accouplée au deuxième pignon de frein, le déplacement du manchon de sélection vers la première position ou la deuxième position étant actionné en fonction du rapport de vitesses qui est sollicité.

La boîte de vitesses selon l'invention présente en outre les caractéristiques suivantes :
- elle comporte également un arbre de marche arrière, l'arbre de marche arrière formant l'axe sur lequel est placé le dispositif de synchronisation.
- le dispositif de synchronisation comporte au moins une plaque formée par la première pièce et au moins un disque formé par la deuxième pièce, la plaque et le disque coopérant l'un avec l'autre par frottement pour freiner en rotation la première pièce et la deuxième pièce l'une par rapport à l'autre,
- la première roue et la deuxième roue sont liées en rotation à l'arbre primaire.

L'invention concerne également un procédé de changement de rapport de vitesse montant pour passer d'un rapport initial (N) à un rapport final (N+1), ce procédé mettant en oeuvre la boîte de vitesses définie selon l'invention, **caractérisé en ce qu**'il comporte les étapes suivantes,
- ouvrir l'embrayage de manière à le mettre à la limite du couple fourni par le moteur préalablement à l'actionnement de l'organe de friction,
- actionner l'organe de friction du dispositif de synchronisation en sélectionnant l'un des deux pignons de frein adapté au rapport de démultiplication approprié par déplacement du manchon de sélection,
- commencer à désengager le manchon à crabots d'un premier deuxième pignon fou,
- une fois que l'arbre primaire a atteint une vitesse de rotation permettant un accouplement du manchon à crabots à un deuxième deuxième pignon fou correspondant, accoupler le manchon à crabots au deuxième deuxième pignon fou,
- réduire progressivement le couple transmis par l'organe de friction, de sorte que tout le couple soit transmis aux roues du véhicule par le rapport final en désengageant progressivement le manchon de sélection du pignon de frein sélectionné, et
- fermer progressivement l'embrayage après avoir désengagé le manchon de sélection.

L'invention a pour objet un procédé de changement de rapport de vitesse descendant pour passer d'un rapport initial (N) à un rapport final (N-1), ce procédé mettant en oeuvre la boîte de vitesses définie selon l'invention, **caractérisé en ce qu**'il comporte les étapes suivantes,
- ouvrir progressivement l'embrayage de manière à le mettre à la limite du couple fourni par le moteur thermique préalablement à l'actionnement de l'organe de friction,
- actionner l'organe de friction du dispositif de synchronisation en sélectionnant l'un des deux pignons de frein adapté au rapport de démultiplication approprié par déplacement du manchon de sélection,
- commencer à désengager le manchon à crabots d'un troisième deuxième pignon fou,
- diminuer le régime cible de l'arbre primaire de manière à s'assurer que manchon soit désengagé du troisième deuxième pignon fou,
- accélérer le moteur de manière à lui faire atteindre le régime cible du rapport final N-1 à engager,
- piloter le régime de l'arbre primaire jusqu'à atteindre sensiblement le régime du rapport final N-1 à engager par action sur l'organe de friction et de l'embrayage,
- engager le rapport final N-1 en positionnant le manchon à crabots qui lui est associé au quatrième deuxième pignon fou dudit rapport N-1,
- réduire progressivement le couple transmis par l'organe de friction de manière à ce que tout le couple soit transmis aux roues par le rapport engagé N-1, et
- fermer progressivement l'embrayage après avoir désengagé le manchon de sélection.

L'invention concerne également un procédé de changement de rapport de vitesse pour passer à un rapport de marche arrière, ce procédé mettant en oeuvre la boîte de vitesses définie selon l'invention, **caractérisé en ce qu**'il comporte les étapes suivantes,
- ouvrir progressivement l'embrayage de manière à le mettre à la limite du couple fourni par le moteur thermique préalablement à l'actionnement de l'organe de friction,
- actionner l'organe de friction du dispositif de synchronisation en sélectionnant le pignon de frein adapté au rapport de marche arrière pour freiner la rotation de l'arbre primaire à une vitesse permettant à un manchon de marche arrière de pouvoir s'accoupler à un pignon de marche arrière,

- accoupler le manchon de marche arrière au pignon de marche arrière,
- réduire progressivement le couple transmis par l'organe de friction, de sorte que tout le couple soit transmis aux roues du véhicule par le rapport de marche arrière en désengageant progressivement le manchon de sélection du pignon de frein sélectionné, et
- fermer progressivement l'embrayage après avoir désengagé le manchon de sélection.

Enfin, l'invention a pour objet un véhicule automobile comportant une boîte de vitesse telle que précédemment décrite.

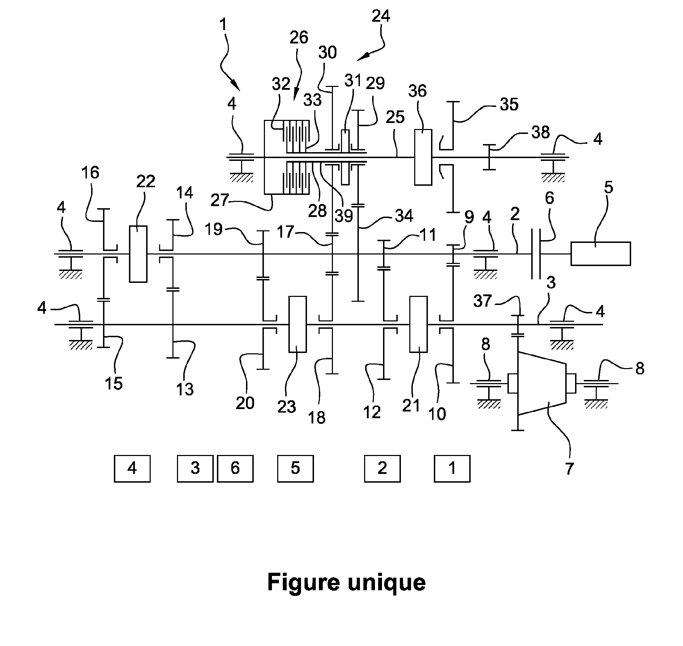

L'invention sera mieux comprise à la lecture de la description qui suit et à l'examen de la figure unique qui l'accompagne. Celle-ci n'est présentée qu'à titre indicatif et nullement limitatif de l'invention.

La figure illustre une boîte de vitesses 1 de type manuelle pilotée d'un véhicule, selon l'invention. La boîte de vitesses 1 comporte un arbre primaire 2 et un arbre secondaire 3 qui sont montés en rotation par l'intermédiaire de paliers dans un carter 4. L'arbre primaire 2 est lié en rotation à un moteur 5 par l'intermédiaire d'un embrayage 6. L'arbre secondaire 3 est relié à des roues motrices (non représentées) du véhicule via un ensemble différentiel. L'ensemble différentiel est formé par un différentiel 7 qui est interposé en sortie de la boîte de vitesses 1 et assure la liaison entre la boîte de vitesses 1 et les roues du véhicule. Le différentiel 7 transmet le couple moteur aux roues motrices du véhicule par l'intermédiaire de deux arbres de transmissions 8.

Selon le mode de réalisation représenté, l'arbre primaire 2 et l'arbre secondaire 3 portent six paires de pignons engrenés en permanence pour déterminer respectivement six rapports de démultiplication, à savoir les pignons référencés 9 et 10 pour le premier rapport de démultiplication, 11 et 12 pour le deuxième rapport, 13 et 14 pour le troisième rapport, 15 et 16 pour le quatrième rapport, 17 et 18 pour le cinquième rapport, 19 et 20 pour le sixième rapport.

En variante, la boîte de vitesses 1 comporte plus ou moins de six rapports.

Chaque paire de pignons de marche avant comporte un pignon dit fixe qui est solidaire de l'un des arbres et un pignon dit fou monté en rotation sur l'autre des arbres par l'intermédiaire d'un palier. Ainsi, sur l'arbre primaire 2, les pignons fixes sont les pignons des premier 9, deuxième 11, cinquième 17 et sixième 19 rapports, et sur l'arbre secondaire 3, les pignons fixes sont les pignons des troisième 13 et quatrième 15 rapports.

La boîte de vitesses 1 comporte trois manchons à crabots 21, 22 et 23 respectivement montés entre les pignons fous 10 et 12, entre les pignons fous 14 et 16 et entre les pignons fous 18 et 20 afin d'accoupler chacun de ces pignons fous et l'arbre primaire 2 ou l'arbre secondaire 3 qui lui correspond pour qu'un rapport soit engagé.

Chaque manchon à crabots est monté mobile axialement sur son arbre et est solidaire en rotation de cet arbre, entre une position découplée et une position accouplée dans laquelle des crabots internes de chaque manchon (non représentés) sont en prise avec des crabots (non représentés) du pignon fou correspondant. Lorsque le manchon à crabots est en position découplée, un autre manchon à crabots peut être en position accouplée.

Chacun des manchons à crabots peut passer d'une position découplée à une position accouplée par un actionneur de déplacement. Cet actionneur est piloté par des moyens de pilotage automatique de la boîte de vitesse, par exemple pour opérer un changement de rapport commandé par le conducteur dans un mode impulsionel de fonctionnement de la boîte pilotée. Cet actionneur déplace une fourchette, non représentée, liée au manchon.

La boîte de vitesses 1 comporte également un dispositif de synchronisation 24 des vitesses de rotation de l'arbre primaire 2 et de l'arbre secondaire 3. Ce dispositif de synchronisation 24 permet le passage des manchons à crabots 21, 22, 23 de leur position découplée vers leur position accouplée en ajustant les vitesses de rotation du pignon fou associé et du manchon à crabots à accoupler associé. Le dispositif de synchronisation 24 permet surtout et avant tout, de transmettre du couple pendant le changement de rapport. Une telle transmission de couple permet de diminuer les chocs liés au crabotage, d'améliorer le ressenti du conducteur au moment du changement de rapport et de donner de la souplesse.

Le dispositif de synchronisation 24 est placé sur un axe 25 monté libre en rotation dans le carter 4 de la boîte de vitesses 1. Le carter 4 loge l'arbre primaire 2, l'arbre secondaire 3, la pluralité de paires de pignons, les manchons à crabots 21, 22 et 23 et le dispositif de synchronisation 24.

Le dispositif de synchronisation 24 comprend un organe de friction 26. Le moyen d'application de l'effort du dispositif de l'organe de friction 26 n'est pas représenté. L'organe de friction 26 est du type multidisques mais il peut être avantageusement remplacé par un synchroniseur multi cône à haute capacité énergétique.

L'organe de friction 26 est formé par une première pièce 27 liée en rotation à l'axe 25 et une deuxième pièce 28 montée fou sur l'axe 25. La deuxième pièce 28 forme un moyeu 39 placé autour de l'axe 25.

Le dispositif de synchronisation 24 comporte également un premier pignon de frein 29 et un deuxième pignon de frein 30. Le premier pignon de frein 29 et le deuxième pignon de frein 30 sont montés fous sur le moyeu 39 de la deuxième pièce 28 de l'organe de friction 26. Le premier pignon de frein 29 et le deuxième pignon de frein 30 sont libres en rotation sur le moyeu 39 de la deuxième pièce 28 tout en étant engrenés respectivement à une première roue 34 et à une deuxième roue 17. La première roue 34 est de diamètre plus grand que celui de la deuxième roue 17. La première roue 34 et la deuxième roue 17 sont montées fixe en rotation à un arbre. Dans l'exemple, la première roue 34 et la deuxième roue 17 sont avantageusement liées en rotation à l'arbre primaire 2 de façon à ce que le dispositif de synchronisation 24 agisse au plus près du moteur 5. Mais elles pourraient être liées en rotation sur l'arbre primaire 2 pour l'une et sur l'arbre secondaire 3 pour l'autre ou bien sur l'arbre secondaire 3 pour les deux.

La première roue 34 est située entre le pignon fixe 11 et le pignon fixe 17. La deuxième roue 17 est située entre le pignon fixe 19 et le pignon fixe 34. Dans l'exemple illustré, la deuxième roue 17 est formée par le pignon fixe 17 du cinquième rapport.

Le dispositif de synchronisation 24 est associé à un premier groupe de rapports, via le premier pignon de frein 29 et la première roue 34, pour permettre d'agir avec la plus grande efficacité possible sur le premier, deuxième et troisième rapports.

Le dispositif de synchronisation 24 est associé à un deuxième groupe de rapports via le deuxième pignon de frein 30 et le pignon fixe 17 pour permettre d'agir avec la plus grande efficacité possible sur le quatrième, cinquième et sixième rapports.

Le dispositif de synchronisation 24 comporte également un manchon de sélection 31 lié en rotation au moyeu 39 de la deuxième pièce 28 de l'organe de friction 26 et mobile axialement le long de ce même moyeu 39 entre une première position accouplée au premier pignon de frein 29 et une deuxième position accouplée au deuxième pignon de frein 30. Le manchon de sélection 31 peut se trouver dans une troisième position intermédiaire non accouplée, c'est-à-dire où le manchon de sélection 31 n'est ni lié au premier pignon de frein 29, ni lié au deuxième pignon de frein 30. Cette troisième position est une position de repos du manchon de sélection 31.

Le manchon de sélection 31 du dispositif de synchronisation 24 est lié en rotation au moyeu 39 de la deuxième pièce 28 par des cannelures formées par le moyeu 39 de la deuxième pièce 28 (solidaire en rotation mais pas en translation) : cette liaison permet donc de sélectionner la démultiplication appropriée au cas de figure.

Le déplacement du manchon de sélection 31 vers la première position ou vers la deuxième position est actionné en fonction du rapport de vitesse qui est sollicité. Lorsque le premier pignon de frein 29 et le deuxième pignon de frein 30 sont liés en rotation par le biais du manchon de sélection 31, ils tournent dans un sens contraire de celui de l'arbre primaire 2.

La première pièce 27 comporte un corps en forme générale de tambour. La paroi périphérique du tambour délimite un logement interne cylindrique comportant au moins une plaque radiale annulaire de freinage 32 et qui s'étend partiellement radialement sur une section du tambour. Dans l'exemple, la première pièce 27 comporte une série de plaques 32.

Le moyeu 39 de la deuxième pièce 28 comporte à une extrémité au moins un disque 33 radial annulaire s'étendant radialement en direction opposée à l'axe 25. Dans l'exemple, la deuxième pièce 28 comporte une série de disques 33.

Les plaques 32 et les disques 33 sont alternativement placés les uns en regard des autres. Quand le dispositif de synchronisation 24 est inactif, les plaques 32 et les disques 33 ne sont pas en contact les uns avec les autres. Et il n'y a, par conséquent, pas de freinage. Quand le dispositif de synchronisation 24 est actif, les plaques 32 et les disques 33 sont au contact les uns avec les autres et il y a freinage et transmission de couple.

Des organes d'actionnement, non représentés, par exemple électromagnétiques ou par un manchon commandé à translation ou de façon électrohydraulique, permettent de rendre le dispositif de synchronisation 24 actif. L'activation du dispositif de synchronisation 24 est obtenue par déplacement du manchon de sélection 31 via ces organes d'entraînement en direction du premier pignon de frein 29 ou du deuxième pignon de frein 30. La liaison du manchon de sélection 31 au premier pignon de frein 29 ou au deuxième pignon de frein 30 permet le rapprochement des disques 33 et des plaques 32 les uns aux autres pour les amener en contact. L'arbre primaire 2 est alors freiné par friction des plaques 32 et des disques 33 entre eux et par l'intermédiaire du couple de pignons 29,34 ou du couple de pignons 30,17 qui transmet cette friction à l'arbre primaire 2.

La boîte de vitesses comporte enfin un pignon de marche arrière 35 et un manchon de marche arrière 36. Le pignon de marche arrière 35 est monté fou sur l'axe 25 et le manchon de marche arrière 36 est monté fixe en rotation sur ce même axe 25. Dans l'exemple illustré, l'axe 25 forme un arbre de marche arrière 25. Le manchon de marche arrière 36 est en position accouplée au pignon de marche arrière 35 lorsque le rapport de marche arrière est commandé. L'arbre secondaire 3 et l'arbre de marche arrière 25 sont reliés au différentiel 7 via respectivement une troisième roue 37 et une quatrième roue 38 qui engrènent avec la couronne du différentiel 7. La troisième roue 37 et la quatrième roue 38 sont montées solidaires en rotation respectivement à l'arbre secondaire 3 et à l'arbre de marche arrière 25.

Le pignon de marche arrière 35 est entraîné par le pignon fou 10 associé au rapport de première et situé sur l'arbre secondaire 3.

L'engagement du premier rapport de marche avant, quand le véhicule est à l'arrêt, s'effectue de la manière suivante. Préalablement à la phase d'engagement du premier rapport de marche, le véhicule est considéré à l'arrêt. Ceci implique dans ce cas que l'arbre secondaire 3 est à l'arrêt, que chacun des manchons de crabots est en position découplée, que le dispositif de synchronisation 24 est inactif et que l'embrayage 6 est fermé. Comme l'embrayage 6 est fermé, l'arbre primaire 2 tourne au même régime que le moteur 5.

Pendant la phase d'engagement du premier rapport de marche avant, l'embrayage 6 est tout d'abord ouvert pour découpler l'arbre primaire 2 et le moteur 5. Le dispositif de synchronisation 24 est alors actionné pour arrêter rapidement la rotation de l'arbre primaire 2. L'arbre primaire 2 et l'arbre secondaire 3 étant tous les deux arrêtés, le manchon à crabots 21 est alors translaté vers le pignon fou 10, jusqu'à être en position accouplée avec ce dernier, c'est-à-dire jusqu'à ce que les crabots du manchon 21 et ceux du pignon fou 10 soient engrenés. Le rapport de première étant engagé, l'embrayage 6 peut alors être refermé progressivement pour la mise en mouvement du véhicule.

Dans le cas où le véhicule n'est pas à l'arrêt préalablement à la phase d'engagement du premier rapport de marche avant, l'embrayage est ouvert de manière à être mis à la limite du couple fourni par le moteur 5 préalablement. Puis le dispositif de synchronisation 24 est actionné. L'arbre primaire 2 est dans ce cas freiné via le dispositif de synchronisation 24 jusqu'à un régime cible fonction de la vitesse de rotation de l'arbre secondaire 3 et du rapport de démultiplication du premier rapport. L'organe de friction 26 est progressivement désactivé. L'embrayage 6 est ensuite progressivement refermé.

Pendant une phase de montée de rapport, par exemple pour passer du premier rapport de vitesse au deuxième rapport de vitesse selon l'invention, l'embrayage 6 est ouvert de manière à être mis à la limite du couple fourni par le moteur 5 préalablement à l'actionnement du dispositif de synchronisation 24. Le couple moteur est toujours transmis par le premier rapport. Le manchon à crabots 21 est toujours lié au pignon fixe 10 du premier rapport. Pour positionner le manchon à crabots 21 en position découplé, on utilise de préférence l'organe de friction 26. En effet, sous fort couple transmis, il est difficile de déplacer le manchon à crabots 21. En conséquence il est possible d'actionner l'organe de friction 26 afin de diminuer le couple transmis via le rapport initial de première (et donc la force axiale nécessaire à l'extraction du rapport).

Le dispositif de synchronisation 24 via l'organe de friction 26 est donc progressivement actionné de façon à transmettre un couple de dérivation croissant. Au moment où le couple de friction généré par l'organe de friction 26 est suffisant, la vitesse de l'arbre primaire 2 et des éléments qui lui sont liés diminue. Le manchon à crabots 21 peut alors être éjecté pour se trouver dans une position découplée ou neutre (désengagé).

Lorsque la vitesse de rotation du pignon fou 12 du deuxième rapport est égale à celle de l'arbre secondaire 3 (dont le manchon à crabots 21 est solidaire en rotation), le manchon à crabots 21 se lie au pignon fixe 12. Le deuxième rapport est ainsi engagé. On évite ainsi le choc de crabotage du au fait qu'il existe une différence de vitesse de rotation entre les deux éléments à craboter.

On diminue ensuite la pression appliquée sur les surfaces de frottement de l'organe de friction 26, afin de transmettre de moins en moins de couple de dérivation.

Ensuite le rapport de deuxième étant engagé, le couple est intégralement transmis via ce rapport. Le couple de dérivation passant par l'organe de friction 26 est nul après avoir désengagé le manchon de sélection 31. Puis l'embrayage 6 est progressivement fermé.

Avantageusement, l'intervalle de temps nécessaire au déplacement du manchon 21 entre ses deux positions accouplées est suffisant pour permettre dans le même temps d'effectuer le freinage de l'arbre primaire 2 entre sa vitesse initiale correspondant au régime du moteur 5 et sa vitesse cible. Cette dernière est déterminée par la vitesse de l'arbre secondaire 3 immédiatement avant la phase montée de rapport, en tenant compte du rapport de démultiplication de la paire de pignon 10,12. La différence de vitesse est déterminée simplement en fonction du rapport supérieur à engager et du régime initial du moteur, ce régime déterminant la vitesse initiale de toute la chaîne de traction du véhicule incluant les arbres 2,3 et les pignons 11, 12 en prise immédiatement avant la phase de montée de rapport.

Pour un changement de rapport entre par exemple le quatrième rapport et le cinquième rapport, le processus est sur le même principe, deux manchons à crabots 22 et 23 étant successivement actionnés, à savoir le manchon 22 qui est découplé du pignon fou 16 par translation et le manchon 23 qui est accouplé avec le pignon fou 18 par translation. La vitesse cible de l'arbre primaire 2 ici est déterminée par celle de l'arbre secondaire 3 immédiatement avant la phase de montée de rapport, en tenant compte du rapport de démultiplication de la paire de pignons 16 et 18.

Avec la boîte de vitesses selon l'invention, le couple moteur transite par l'arbre primaire 2 (via l'embrayage 6), passe par l'arbre de marche arrière 25 (via la démultiplication sélectionnée à l'aide du manchon de sélection dédié) puis est directement transmis au différentiel 7 (via l'engrenage dédié).

Le couple transmis pendant le changement de rapport transite donc par deux engrenages : celui sélectionné par l'intermédiaire du premier pignon de frein 29 ou du deuxième pignon de frein 30 et celui du différentiel 7.

Dans un exemple, avec un passage de la première à la deuxième, on obtient une démultiplication de 0,756 avec le premier pignon de frein 29 et une démultiplication de 1,548 avec le deuxième pignon de frein 30. Pour ce même passage, en considérant que le couple à la roue est de 100% en deuxième, il est possible d'atteindre 69% en utilisant le premier pignon de frein 29 et 34% en utilisant le deuxième pignon de frein 30. Le couple à la roue est deux fois plus important en utilisant le premier pignon de frein 29, ce qui améliore directement la prestation atteignable par le dispositif de synchronisation 24 et améliore le ressenti par le conducteur du véhicule.

Un autre type de phase correspond à un changement de rapport en rétrogradant, dit rétrogradage, pendant lequel il y a passage d'un rapport de vitesse supérieur (N) à un rapport de vitesse inférieur (N-1). Ce type de passage descendant sous couple moteur s'effectue également avec transmission de couple moteur.

Pendant la phase de rétrogradage, par exemple pour passer du deuxième rapport de vitesse au premier rapport de vitesse, alors que le véhicule roule, il est procédé de la manière suivante.

L'embrayage 6 est progressivement ouvert de manière à le mettre à la limite du couple fourni par le moteur 5 préalablement à l'actionnement de l'organe de friction 26.

Un couple de dérivation est ensuite créé par actionnement de l'organe de friction 26, ce qui va progressivement faire chuter le régime de l'arbre primaire 2.

Dès la chute de régime, le rapport de deuxième est désengagé. On diminue le régime de l'arbre primaire 2 de manière à s'assurer que le manchon à crabots 21 du deuxième rapport est éjecté, c'est-à-dire que le manchon à crabots 21 n'est plus lié au pignon fou 12. Le manchon à crabots 21 est en position découplée.

Puis le moteur 5 est accéléré pour relancer le régime de l'arbre primaire 2. Cette accélération est possible du fait du faible couple transmis par glissement via l'organe de friction 26. Lorsque la vitesse du pignon fou 10 du rapport cible de première est égale à celle de l'arbre secondaire 3, l'engagement de première est déclenché. Le manchon à crabots 21 s'accouple au pignon fou 10. Puis, on ouvre l'organe de friction 26 de sorte qu'il ne génère plus aucun couple de dérivation. L'embrayage 6 est alors progressivement fermé.

L'invention peut être également utilisée pour faciliter l'engagement de la marche arrière, en freinant les inerties encore en rotation lors de la tentative d'engagement du rapport de marche arrière.

A cet effet, on ralentit l'arbre primaire 2 avant d'engager la marche arrière par action de l'organe de friction 26 avant engagement, ce qui autorise l'utilisation de la technologie manchon à crabots en évitant les inconvénients connus.

L'embrayage est progressivement ouvert de manière à le mettre à la limite du couple fourni par le moteur thermique préalablement à l'actionnement de l'organe de friction 26. L'organe de friction 26 est actionné en sélectionnant le pignon de frein adapté au rapport de marche arrière. L'arbre primaire 2 est freiné en rotation à une vitesse permettant au manchon de marche arrière 36 de pouvoir s'accoupler au pignon de marche arrière 35.

Lorsque le manchon de marche arrière 36 est accouplé au pignon de marche arrière 35, le couple transmis par l'organe de friction 26 est réduit progressivement, de sorte que tout le couple soit transmis aux roues du véhicule par le rapport de marche arrière en désengageant progressivement le manchon de sélection 31 du pignon de frein sélectionné. Puis l'embrayage est progressivement fermé après avoir désengagé le manchon de sélection 31.

En cas de défaillance, il est possible de n'utiliser qu'un seul des deux pignons de frein pour préserver le système, indépendamment du groupe de rapport de vitesses concerné.

L'actionnement de l'organe de friction 26 peut être anticipée par présélection en fonction de paramètres à définir (rapport engagé, style de conduite, position pédales...).

Selon l'invention, l'embrayage 6 est constamment en glissement pendant toute la séquence du changement de rapport. Il est mis en glissement avant le changement de rapport (à une position fonction du couple transmis par le moteur) et est recollé uniquement une fois que le rapport cible transmet la totalité du couple. L'un ou l'autre pignon de frein 29 ou 30 est préalablement sélectionné, avant la demande de changement de rapport.

La boîte de vitesses 1 selon l'invention permet d'améliorer le remplissage de couple qui est largement amélioré.

La boîte de vitesses 1 selon l'invention permet également d'augmenter le rendement de transmission pendant le changement de rapport (diminution du nombre d'engrenages requis).

La boîte de vitesses 1 selon l'invention permet de gagner en encombrement axial en implantant le dispositif de synchronisation 24 sur l'arbre de marche arrière 25 pour permettre d'exploiter un « volume mort » qui n'a pas d'impact sur l'encombrement axial global de la boîte de vitesses et donc sur la limitation du rayon de braquage (sur applications à moteur transversal).

La boîte de vitesses 1 selon l'invention permet de simplifier le circuit de lubrification nécessaire au refroidissement du dispositif de synchronisation car l'implantation proposée selon l'invention à proximité de la couronne du différentiel 7 permet de bénéficier des remontées naturelles d'huile et permet d'alimenter le circuit de lubrification et ses goulottes. Il est ainsi plus aisé d'amener de l'huile à l'intérieur de l'arbre de marche arrière 25 qu'à l'intérieur de l'arbre primaire 2. On a donc un gain en efficacité mais également en coût puisque cela engendre une simplification du circuit de lubrification existant.

La boîte de vitesses 1 selon l'invention permet d'augmenter l'accessibilité à l'intérieur du carter 4. Grâce à cette architecture, il n'est plus nécessaire de désassembler les lignes des arbres primaire 2 et secondaire 3 pour accéder au dispositif de synchronisation 24 en cas de disfonctionnement. Il est même envisageable de prévoir une cassette amovible permettant d'y accéder directement.

## Revendications

1. Boîte de vitesses (1) de type manuelle pilotée d'un véhicule automobile comportant un carter (4) renfermant :
- un arbre primaire (2) apte à être lié en rotation à un moteur (5) du véhicule par l'intermédiaire d'un embrayage (6),
- un arbre secondaire (3) apte à être relié à au moins une roue motrice du véhicule,
- une pluralité de paires de pignons (9,10 ;11,12 ;13,14 ;15,16 ;17,18 ;19,20) engrenés déterminant chacune un rapport de démultiplication de marche avant et comportant chacune un premier pignon (9,11,13,15,17,19) solidaire d'un des deux arbres et un deuxième pignon (10,12,14,16,18,20) monté fou en rotation sur l'autre arbre,
- au moins un manchon à crabots (21,22,23) alternativement en position accouplée en liant en rotation un des deuxièmes pignons et son arbre et en position découplée libre en rotation par rapport au deuxième pignon, et
- un dispositif de synchronisation (24) des vitesses de rotation des arbres permettant le passage du manchon à crabots de sa position découplée vers sa position accouplée en ajustant les vitesses de rotation du deuxième pignon et du manchon à crabots à accoupler, le dispositif de synchronisation étant placé sur un axe (25) monté dans le carter (4) de la boîte de vitesses, **caractérisée en ce que**
- le dispositif de synchronisation comprend
- un organe de friction formé par une première pièce (27) liée en rotation à l'axe et une deuxième pièce (28) formant un moyeu (39) monté fou sur l'axe,
- un premier pignon de frein (29) associé à un premier groupe de rapports de vitesses par engrenage avec une première roue (34),
- un deuxième pignon de frein (30) associé à un deuxième groupe de rapports de vitesses par engrenage avec une deuxième roue (17), le premier pignon de frein et le deuxième pignon de frein étant montés fous sur le moyeu de la deuxième pièce de l'organe de friction, la première roue et la deuxième roue étant chacune montées solidaires en rotation à un des deux arbres, et
- un manchon de sélection (31) lié en rotation à la deuxième pièce de l'organe de friction et mobile axialement le long de cette deuxième pièce entre une première position accouplée au premier pignon de frein et une deuxième position accouplée au deuxième pignon de frein, le déplacement du manchon de sélection vers la première position ou la deuxième position étant actionné en fonction du rapport de vitesses qui est sollicité.

2. Boîte de vitesses selon la revendication 1, **caractérisée en ce qu'**elle comporte également un arbre de marche arrière, l'arbre de marche arrière formant l'axe (25) sur lequel est placé le dispositif de synchronisation.

3. Boîte de vitesses selon l'une des revendications 1 à 2, **caractérisée en ce que** le dispositif de synchronisation comporte au moins une plaque (32) formée par la première pièce et au moins un disque (33) formé par la deuxième pièce, la plaque et le disque coopérant l'un avec l'autre par frottement pour freiner en rotation la première pièce et la deuxième pièce l'une par rapport à l'autre.

4. Boîte de vitesses selon l'une des revendications 1 à 3, **caractérisée en ce que**, la première roue et la deuxième roue sont liées en rotation à l'arbre primaire.

5. Procédé de changement de rapport de vitesse montant pour passer d'un rapport initial (N) à un rapport final (N+1), ce procédé mettant en oeuvre la boîte de vitesses définie selon l'une des revendications 1 à 4, **caractérisé en ce qu'**il comporte les étapes suivantes,
- ouvrir l'embrayage de manière à le mettre à la limite du couple fourni par le moteur thermique préalablement à l'actionnement de l'organe de friction,
- actionner l'organe de friction du dispositif de synchronisation en sélectionnant l'un des deux pignons de frein adapté au rapport de démultiplication approprié par déplacement du manchon de sélection,
- commencer à désengager le manchon à crabots d'un premier deuxième pignon fou,
- une fois que l'arbre primaire a atteint une vitesse de rotation permettant un accouplement du manchon à crabots à un deuxième deuxième pignon fou correspondant, accoupler le manchon à crabots au deuxième deuxième pignon fou,
- réduire progressivement le couple transmis par l'organe de friction, de sorte que tout le couple soit transmis aux roues du véhicule par le rapport final en désengageant progressivement le manchon de sélection du pignon de frein sélectionné, et
- fermer progressivement l'embrayage après avoir désengagé le manchon de sélection.

6. Procédé de changement de rapport de vitesse descendant pour passer d'un rapport initial (N) à un rapport final (N-1), ce procédé mettant en oeuvre la boîte de vitesses définie selon l'une des revendications 1 à 4, **caractérisé en ce qu'**il comporte les étapes suivantes,
- ouvrir progressivement l'embrayage de manière à le mettre à la limite du couple fourni par le moteur thermique préalablement à l'actionnement de l'organe de friction,
- actionner l'organe de friction du dispositif de synchronisation en sélectionnant l'un des deux pignons de frein adapté au rapport de démultiplication approprié par déplacement du manchon de sélection,
- commencer à désengager le manchon à crabots d'un troisième deuxième pignon fou,
- diminuer le régime cible de l'arbre primaire de manière à s'assurer que manchon soit désengagé du troisième deuxième pignon fou,
- accélérer le moteur thermique de manière à lui faire atteindre le régime cible du rapport final N-1 à engager,
- piloter le régime de l'arbre primaire jusqu'à atteindre sensiblement le régime du rapport final N-1 à engager par action sur l'organe de friction et de l'embrayage,
- engager le rapport final N-1 en positionnant le manchon à crabots qui lui est associé à un quatrième deuxième pignon fou dudit rapport N-1,
- réduire progressivement le couple transmis par l'organe de friction de manière à ce que tout le couple soit transmis aux roues du véhicule par le rapport engagé N-1, et
- fermer progressivement l'embrayage après avoir désengagé le manchon de sélection.

7. Procédé de changement de rapport de vitesse pour passer à un rapport de marche arrière, ce procédé mettant en oeuvre la boîte de vitesses définie selon l'une des revendications 1 à 4, **caractérisé en ce qu'**il comporte les étapes suivantes,
- ouvrir progressivement l'embrayage de manière à le mettre à la limite du couple fourni par le moteur thermique préalablement à l'actionnement de l'organe de friction,
- actionner l'organe de friction du dispositif de synchronisation en sélectionnant le pignon de frein adapté au rapport de marche arrière pour freiner la rotation de l'arbre primaire à une vitesse permettant à un manchon de marche arrière (36) de pouvoir s'accoupler à un pignon de marche arrière (35),
- accoupler le manchon de marche arrière (36) au pignon de marche arrière (35),
- réduire progressivement le couple transmis par l'organe de friction, de sorte que tout le couple soit transmis aux roues du véhicule par le rapport de marche arrière en désengageant progressivement le manchon de sélection du pignon de frein sélectionné, et
- fermer progressivement l'embrayage après avoir désengagé le manchon de sélection.

8. Véhicule automobile comportant une boîte de vitesses selon l'une quelconque des revendications 1 à 4.
